# EUROPÄISCHE PATENTSCHRIFT

(11) **EP 1 081 460 B1**
(45) Veröffentlichungstag und Bekanntmachung des Hinweises auf die Patenterteilung: **28.02.2007**
(21) Anmeldenummer: 00810736.9
(22) Anmeldetag: 18.08.2000
(51) Int. Cl.: G01C 15/00

(54) **Laseranordnung für ein mehrstrahliges Laserrichtgerät**
Laser assembly for a multi-beam laser aiming device
Ensemble laser pour un dispositif de pointage à laser à faisceaux multiples

(30) Priorität: 28.08.1999 DE 19941030
(43) Veröffentlichungstag der Anmeldung: 07.03.2001
(73) Patentinhaber: HILTI Aktiengesellschaft, 9494 Schaan (LI)
(72) Erfinder: Waibel, Reinhard, 9442 Berneck (CH); Bünter, Erwin, 9453 Eichberg (CH); Piske, Wilfired, 9435 Heerbrugg (CH)
(74) Vertreter: Wildi, Roland

(56) Entgegenhaltungen:
- EP-A- 0 543 115
- DE-C- 4 341 553
- US-A- 543 730
- US-A- 3 897 637
- US-A- 5 825 555
- PATENT ABSTRACTS OF JAPAN vol. 018, no. 045 (P-1681), 24. Januar 1994 (1994-01-24) -& JP 05 272967 A (TOPCON CORP), 22. Oktober 1993 (1993-10-22)
- PATENT ABSTRACTS OF JAPAN vol. 010, no. 160 (P-465), 7. Juni 1986 (1986-06-07) & JP 61 013211 A (FUJI SHASHIN FILM KK), 21. Januar 1986 (1986-01-21)
- PATENT ABSTRACTS OF JAPAN vol. 011, no. 230 (P-599), 28. Juli 1987 (1987-07-28) & JP 62 043620 A (FUJI PHOTO FILM CO LTD), 25. Februar 1987 (1987-02-25)

## Beschreibung

Die Erfindung betrifft eine Laseranordnung für ein mehrstrahliges Laserrichtgerät gemäss dem Oberbegriff des Patentanspruchs 1.

In der Bauindustrie werden zunehmend die seit langem bekannten mechanischen Einrichtungen, die über eine visuelle Kontrolle eine Ausrichtung und Messung der Lagegenauigkeit von Bauteilen, Einbauten, Installationen und dergleichen mehr ermöglichen, durch optische Einrichtungen ersetzt, die auf der Basis eines lichtstarken, kollimierten Lichtstrahlenbündels beruhen. Seit die Halbleiterindustrie in der Lage ist, in grossen Stückzahlen Laserdioden mit Abstrahlung im sichtbaren Spektrum, üblicherweise in Rot, zur Verfügung zu stellen, sind in der Bauindustrie eine Reihe von Messeinrichtungen bekannt geworden, welche die bis dahin dominierenden mechano-visuellen Vorrichtungen und Verfahren ersetzen und darüber hinaus auch zusätzliche, neue Möglichkeiten der Messung bieten. Beispielsweise haben Richtgeräte eine grosse Akzeptanz gefunden, die zumindest ein kollimiertes Laserstrahlenbündel aussenden, das im Entfernungsbereich bis etwa 20 m einen Durchmesser von maximal etwa 10 mm und eine Abweichung von etwa 1 mm/10 m in horizontaler Richtung aufweist. Die horizontale Ausrichtung des Laserstrahlenbündels erfolgt dabei in der Regel selbsttätig durch schwerkraftbeeinflusste Konstruktionen oder Regelkreise.

Neben der horizontalen Ausrichtung und Nivellierung besteht in der Baupraxis vielfach auch die Notwendigkeit ein Lot zu erstellen oder exakt rechte Winkel abzustecken. Dazu ist beispielsweise aus der US-A-5,144,487 ein Laserrichtgerät bekannt, das drei in einer Horizontalebene liegende, rechtwinklig zueinander verlaufende Laserstrahlenbündel emittiert. Zusätzlich emittiert das Gerät noch zwei Lotstrahlen. Zur Erzeugung der horizontalen und lotrechten Laserstrahlenbündel ist innerhalb des Geräts eine Anordung von Spiegeln vorgesehen, die das von einer Laserdiode stammende, primäre Laserstrahlenbündel in die gewünschten Richtungen ablenken. Die Ablenkspiegel zur Erzeugung der insgesamt fünf horizontalen und lotrechten Strahlenbündel sind in einem räumlichen Abstand voneinander im Strahlengang des primären Laserstrahlenbündels angeordnet. Dadurch entsteht für das von den emittierten Laserstrahlenbündeln aufgespannte dreidimensionale Achsensystem ein Nullpunktversatz, weil die lotrechten Strahlenbündel und die horizontalen Strahlenbündel unterschiedliche virtuelle Ursprünge aufweisen. Bislang behelfen sich die Hersteller derartiger Laserrichtgeräte damit, für diesen Nullpunktversatz konstruktiv ein rundes Mass von beispielsweise 20 mm vorzusehen. Bei Messungen mit derartigen Laserrichtgeräten muss der Nullpunktversatz immer mitberücksichtigt werden. Dies stellt bei Anwendungen eine nicht unerhebliche Fehlerquelle dar. Durch die Aufspaltung des von der Lichtquelle kommenden, primären Laserstrahlenbündels wird die für das einzelne Teilstrahlenbündel verbleibende Intensität stark verringert. Zwar wird versucht, diesem Nachteil durch die Verwendung einer Laserlichtquelle mit entsprechend hoher Leistung abzuhelfen. Da die Kosten für Laserdioden überproportional zur abgegebenen Leistung steigen, ist diese Lösung kaum wirtschaftlich. Manchmal besteht auch der Wunsch, Teilstrahlen mit unterschiedlichen Farben zu erzeugen. Dies ist jedoch mit den handelsüblichen Geräten nicht möglich.

Nach der EP0543115A und der JP61013211A ist vorbekannt, die Laserstrahlen mehrerer Halbleiterlaser mit elliptischem Strahlquerschnitt und zueinander gedrehten lichtemittierenden Flächen zu überlagern.

Nach der JP05272967A ist vorbekannt, bei einem optischen Vermessungsinstrument einen aus überlagerten Teilstrahlen zusammengesetzten Laserstrahl mittels eines Strahlteilers mit reflektierten Flächen in Teilstrahlen zu teilen, die in einer Ebene liegen.

Nach der US5825555 ist ein Rotationslaser mit in einen Rotationsstrahl und beidseitige Achsstrahlen aufgeteilten Laserstrahl genau einer Laserdiode mit elliptischem Strahlquerschnitt vorbekannt. Sämtliche Teilstrahlen liegen stets in der um die Rotationsachse rotierenden Ebene.

Aufgabe der vorliegenden Erfindung ist es daher, diesen Nachteilen der Laserrichtgeräte des Standes der Technik abzuhelfen. Es soll die Voraussetzung dafür geschaffen werden, ein optisches Achsensystem anzuzeigen, bei dem ein Nullpunktversatz vermieden ist. Dabei sollen die Teilstrahlenbündel eine ausreichend grosse Intensität aufweisen, damit auch Anzeigen über grössere Entfernungen ermöglicht sind. Die Lösung soll wirtschaftlich und einfach umsetzbar sein. Es sollen auch die Voraussetzungen dafür geschaffen werden, Teilstrahlenbündel mit unterschiedlichen Farben zu erzeugen, ohne dabei Verluste in der Lichtintensität in Kauf nehmen zu müssen.

Die Lösung dieser Aufgaben besteht in einer Laseranordnung für ein mehrstrahliges Laserrichtgerät mit den im kennzeichnenden Abschnitt des Patentanspruchs 1 angeführten Merkmalen. Bevorzugte Ausführungsbeispiele und/oder Weiterbildungen der Erfindung sind Gegenstand der abhängigen Ansprüche. Die erfindungsgemässe Laseranordnung ist für den Einsatz in einem mehrstrahligen Laserrichtgerät ausgebildet, das eine Lichtquelle zur Erzeugung wenigstens eines primären Laserstrahlenbündels und einen optischen Strahlteiler mit reflektierenden Flächen umfasst, durch den das wenigstens eine primäre Laserstrahlenbündel in mindestens zwei, senkrecht zueinander verlaufende Teilstrahlenbündel aufspaltbar ist. Gemäss der Erfindung umfasst die Lichtquelle zwei Halbleiterlaser, deren lichtemittierende Flächen eine Längs- und eine Querausdehnung aufweisen, deren Verhältnis etwa 2,5 : 1 bis etwa 4 : 1 beträgt. Die Halbleiterlaser sind mit ihren lichtemittierenden Flächen derart angeordnet, dass die Längsausdehnungen der lichtemittierenden Flächen unter einem Winkel von 90° zueinander gedreht verlaufen und die von den beiden Halbleiterlasern erzeugten Primärstrahlenbündel vor oder am Strahlteiler überlagerbar sind.

Ein von einem Halbleiterlaser emittierter Laserstrahl weist eine elliptische Strahlgeometrie auf, die eine Folge der rechteckigen Form der lichtemittierenden Fläche der Laserlicht erzeugenden Schicht des Halbleiterlasers ist. Durch die gewählte Anordnung der Halbleiterlaser, mit 90° zueinander gedrehten lichtemittierenden Flächen, weist das aus den beiden elliptischen Primärstrahlenbündel überlagerte Gesamtstrahlenbündel eine im wesentlichen sternförmige Form auf, die sich aus den beiden, um 90° zueinander gedrehten Ellipsen ergibt. Das Gesamtstrahlenbündel besitzt dadurch wieder eine im wesentlichen symmetrische Form, die den geometrischen Anforderungen des Strahlteilers gerecht wird. Durch die Überlagerung der Primärstrahlenbündel von zwei Halbleiterlasern können bei ausreichend hoher Lichtintensität auch Halbleiterlaser mit geringeren Leistungen als Lichtquelle eingesetzt werden. Im Fall des Ausfalls eines der Halbleiterlaser kommt es nicht zu einem Totalausfall des Laserrichtgeräts, sondern es bleibt zumindest beschränkt einsetzbar. Dadurch ist die Wirtschaftlichkeit und die Verfügbarkeit der Laserrichtgeräte noch weiter verbessert. Es sind auch Halbleiterlaser mit unterschiedlichen Leistungen und verschiedenen Wellenlängen als Lichtquelle einsetzbar. Dadurch ergeben sich für das Laserrichtgerät interessante Variationsmöglichkeiten bezüglich der emittierten Laserstrahlen. Im Fall eines dreidimensionalen Laserrichtgeräts können beispielweise die wenigstens drei, ein kartesisches Achsensystem aufspannenden Laserstrahlen verschiedene Farben aufweisen. Der Anwender kann sich somit auch an der Farbe der projizierten Markierung orientieren.

Zur weiteren Verbesserung der Strahlgeometrie und zur verbesserten Anpassung an die Erfordernisse des Strahlteilers können wenigstens zwischen einem der Halbleiterlaser und dem Strahlteiler ein oder mehrere strahlformende Elemente angeordnet sein.

Bei einem Ausführungsbeispiel der Laseranordnung sind die Halbleiterlaser mit ihren lichtemittierenden Flächen senkrecht zueinander angeordnet. Die beiden emittierten Primärstrahlenbündel sind auf einen halbdurchlässigen Spiegel gerichtet, der zwischen den Halbleiterlasern und dem Strahlteiler angeordnet ist und gegenüber der Ausbreitungsrichtung beider Primärstrahlen unter 45° geneigt angeordnet ist, und werden dort zu einem primären Gesamtstrahlenbündel überlagert. Die gewählte Anordnung ist einfach auszuführen und erfordert, abgesehen von einem halbdurchlässigen Spiegel, keine weiteren speziell ausgebildeten optischen Elemente. Der Strahlteiler weist bei der gewählten Anordnung der beiden Halbleiterlaser wenigstens zwei, vorzugsweise vier, reflektierende Flächen auf. Die reflektierenden Flächen sind im rechten Winkel zueinander und im gleichen Abstand vom halbdurchlässigen Spiegel angeordnet. Sie sind gegenüber dem einfallenden primären Gesamtstrahlenbündel jeweils um 45° geneigt und ragen derart in das Gesamtstrahlenbündel, dass für einen Teil des primären Gesamtstrahlenbündels ein Strahldurchlass gebildet ist. Durch die Anordnung der reflektierenden Flächen im Strahlengang des primären Lichtstrahlenbündels sind sehr einfach drei, jeweils senkrecht zueinander verlaufende Teilstrahlenbündel erzeugbar. Die von den reflektierenden Flächen des Strahlteilers erzeugten Teilstrahlenbündel bilden beispielsweise die orthogonalen y- und z-Achsen. Der ungehindert durchtretende Teil des primären Gesamtstrahlenbündels bildet die x-Achse. Bei einer Anordnung von vier reflektierenden Flächen wird das primäre Gesamtstrahlenbündel in insgesamt fünf Teilstrahlenbündel zerlegt. Auf diese Weise sind auch die "negativen" Abschnitte der y-und z-Achsen erzeugbar. Das derart erzeugte kartesische Achsensystem aus Teilstrahlenbündeln besitzt einen gemeinsamen virtuellen Ursprung, der sich aus dem Schnittpunkt der Verlängerung der Teilstrahlenbündel durch die "Auftreffpunkte" des primären Gesamtstrahlenbündels auf die reflektierenden Flächen ergibt. Der ungehindert durchtretende Teil des primären Gesamtstrahlenbündels trifft ebenfalls auf diesen Schnittpunkt. Ein Nullpunktversatz ist dadurch zuverlässig vermieden. Die Anordnung der reflektierenden Flächen schafft die Vorraussetzung für eine kompakte und robuste Bauweise der optischen Elemente, was die Montage im Laserrichtgerät erleichtert und die Anfälligkeit des Strahlteilers gegenüber Erschütterungen verringert.

In einer Variante der Laseranordnung für ein Laserrichtgerät sind die lichtemittierenden Flächen der Halbleiterlaser unter einem spitzen Winkel zueinander angeordnet. Der Strahlteiler weist wenigstens zwei, vorzugsweise vier, reflektierende Flächen auf, die miteinander jeweils paarweise einen Winkel von 90° einschliessen und den gleichen Abstand von dem zugeordneten Halbleiterlaser besitzen. Dabei sind die reflektierenden Flächenpaare gegenüber dem jeweils einfallenden Primärstrahlenbündel unter einem Winkel von 45° geneigt angeordnet. Bei dieser Ausführungsvariante der Erfindung entfällt der halbdurchlässige Spiegel. Die beiden Halbleiterlaser sind mit ihren lichtemittierenden Flächen auf die reflektierenden Flächen des Strahlteilers ausgerichtet und werden erst am Strahlteiler zu einem Gesamtstrahlenbündel überlagert.

In einer weiteren vorteilhaften Ausführungsvariante der erfindungsgemässen Laseranordnung sind die lichtemittierenden Flächen der Halbleiterlaser parallel zueinander ausgerichtet. Der Strahlteiler ist von zwei Prismen gebildet, die senkrecht zueinander verlaufende Längsachsen besitzen und mit ihren beiden Prismenflächen unter 45° gegenüber dem jeweiligen, zugeordneten Primärstrahlenbündel angeordnet sind. Dabei weist dasjenige Prisma, dessen eine von zwei planparallelen Seitenflächen in Nachbarschaft zu einer der Prismenflächen des zweiten Prismas angeordnet ist, optisch polierte Seitenflächen auf. Bei dieser Ausführungsvariante der Erfindung setzt sich der Strahlteiler aus zwei einfachen Prismen zusammen, deren reflektierende Prismenflächen an der dem Halbleiterlaser zugewandten Prismenkante einen Winkel von 90° miteinander einschliessen. Dabei besitzt dasjenige Prisma, durch das ein abgelenktes Teilstrahlenbündel ungebrochen durchtreten muss, optisch polierte, planparallele Seitenflächen und einen senkrecht zu den Seitenflächen verlaufenden und sich von der Prismenkante zur Basisfläche erstreckenden Durchlass für einen Mittenbereich des einfallenden Primärstrahlenbündels. Die Prismen sind einfach und wirtschaftlich in der Herstellung. Ihre Montage und Ausrichtung im Laserrichtgerät ist relativ einfach zu bewerkstelligen. Die Prismen sind robust und weitgehend unempfindlich gegenüber Erschütterungen.

Aus fertigungstechnischen Gründen und zur Verbesserung der Robustheit der Konstruktion sind die reflektierenden Flächen des Strahlteilers miteinander zu einer baulichen Einheit verbunden. Beispielsweise können die beiden Prismen zu einer in sich abgestimmten Einheit zusammengebaut sein. In einer besonders vorteilhaften Ausführungsvariante sind die reflektierenden Flächen des Strahlteilers an einem monolithischen Bauteil ausgebildet. Das Bauteil kann beispielsweise die Gestalt eines Pyramidenstumpfes aufweisen, wobei die Pyramidenflächen unter 90° zueinander verlaufen. Die Neigung der Pyramidenflächen gegenüber der Senkrechten beträgt beispielsweise 45°.

Im folgenden wird die Erfindung unter Bezugnahme auf in den Figuren schematisch dargestellte Ausführungsbeispiele näher erläutert. Die Darstellungen beschränken sich dabei auf die für das Verständnis der Erfindung wesentlichen Elemente. Es zeigen:
- Fig. 1: ein Schema eines Halbleiterlasers;

- Fig. 2: ein erstes Ausführungsbeispiel einer Laseranordnung;
- Fig. 3: eine schematische Darstellung des Querschnitts des primären Gesamtstrahlenverlaufes am Ort der Überlagerung;
- Fig. 4: eine zweites Ausführungsbeispiel einer Laseranordnung; und
- Fig. 5: eine weitere Variante einer Laseranordnung.

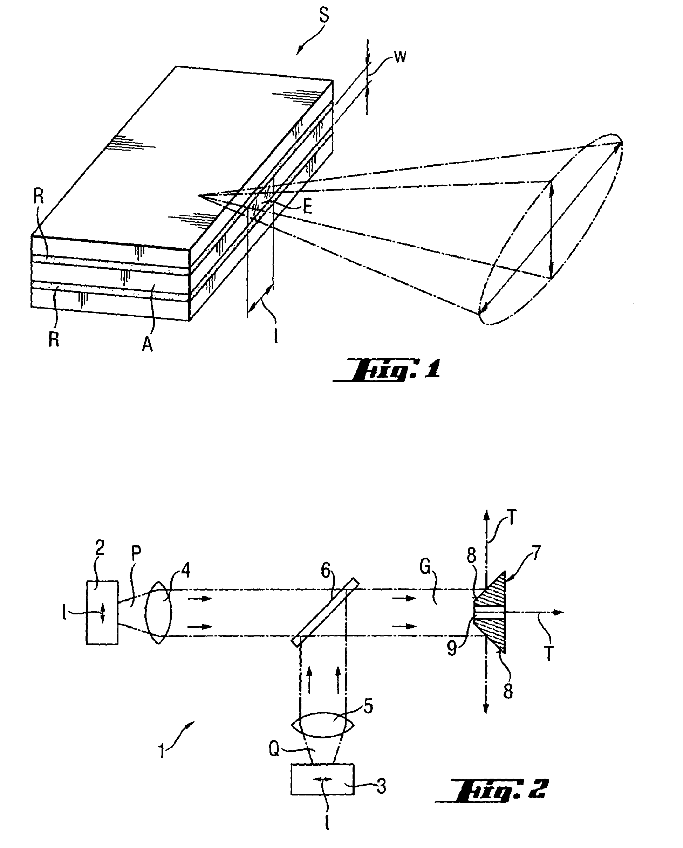

Fig. 1 zeigt einen handelsüblichen Halbleiterlaser S, der einen schichtförmigen Aufbau aufweist. Insbesondere ist eine aktive Schicht A zwischen zwei reflektierenden Schichten R angeordnet, an denen Totalreflexion erfolgt. Die lichtemittierende Fläche des Halbleiterlasers S ist mit dem Bezugszeichen E versehen. Die lichtemittierende Fläche E weist eine rechteckige Form mit einer Längsausdehnung l und eine Querausdehnung w auf. Die Längs- und die Querausdehnung l, w der lichtemittierenden Fläche E stehen in einem Verhältnis von etwa 2,5 : 1 bis etwa 4 : 1. Infolge der Asymmetrie der lichtemittierenden Fläche E weist der emittierte Laserstrahl einen elliptischen Querschnitt auf.

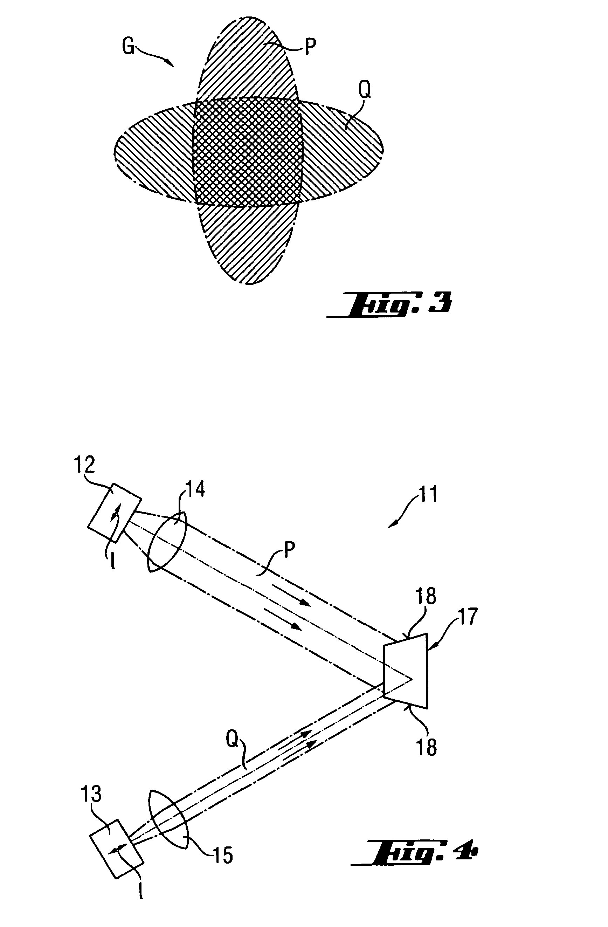

In Fig. 2 ist eine erste Laseranordnung 1 schematisch dargestellt, die beispielsweise in einem mehrstrahligen Laserrichtgerät angeordnet sein kann. Die Laseranordnung 1 umfasst zwei Halbleiterlaser 2 und 3, die derart senkrecht zueinander ausgerichtet sind, dass die Längsausdehnungen ihrer lichtemittierenden Flächen senkrecht zueinander verlaufen. Dies ist in Fig. 2 durch die senkrecht zueinander angeordneten Pfeile l angedeutet. Die von den Laserlichtquellen 2, 3 emittierten Primärstrahlenbündel P, Q werden durch Kollimatorlinsen 4, 5 geleitet und an einem halbdurchlässigen Spiegel 6 zu einem primären Gesamtstrahlenbündel G überlagert. Die Querschnittskontur des primären Gesamtstrahlenbündels G am Ort der Überlagerung ist in Fig. 3 angedeutet. Daraus ist ersichtlich, dass die beiden elliptischen Primärstrahlenbündel P, Q wegen der gewählten Anordnung der beiden Halbleiterlaser 2, 3 um 90° gegeneinander gedreht sind. Die Überlagerung der beiden elliptischen Primärstrahlenbündel P, Q führt zu einem Gesamtstrahlenbündel G, das einen im wesentlichen sternförmigen Querschnitt aufweist. Der halbdurchlässige Spiegel 6 ist gegenüber den beiden Primärstrahlenbündeln P, Q um 45° geneigt angeordnet.

Die zu einem primären Gesamtstahlenbündel G überlagerten Primärstrahlenbündel P, Q werden zu einem Strahlteiler 7 geleitet, der mit reflektierenden Flächen 8 und einer zentralen Durchgangsbohrung 9 für einen Mittenabschnitt des primären Gesamt-strahlenbündels G versehen ist. Anstatt mit einer Durchgangsbohrung 9 kann der Strahlteiler auch mit planparallelen, polierten Flächen versehen sein, durch die der senkrecht auftreffende Teil des Primärstrahlenbündels ungehindert durchtreten kann. Die reflektierenden Flächen 8 sind unter 90° zueinander ausgerichtet und gegenüber dem einfallenden primären Gesamtstrahlenbündel um 45° geneigt. Beispielsweise besitzt der Strahlteiler 7 die Form eines Pyramidenstumpfes mit quadratischer Grundfläche und verspiegelten Seitenflächen. Wegen der im wesentlichen sternförmigen Querschnittskontur des primären Gesamtstrahlenbündels G ist jeder reflektierenden Seitenfläche 8 des Pyramidenstumpfes gerade ein Teilabschnitt einer Halbellipse zugeordnet. Der auf die reflektierende Fläche 8 auftreffende Teil des Gesamtstrahlenbündels G wird gegenüber der Einfallsrichtung um 90° abgelenkt. Der Mittenabschnitt des überlagerten Gesamtstrahlenbündels G passiert den Strahlteiler 7 im wesentlichen ungehindert durch die zentrale Durchgangsbohrung 9. Im Fall von 4 reflektierenden Flächen 8 sind auf dieser Weise vier Teilstrahlenbündel T erzeugbar, die paarweise senkrecht zueinander verlaufen. Der Mittenteil des primären Gesamtstrahlenbündels verläuft senkrecht zu den abgelenkten Teilstrahlenbündeln T. Auf diese Weise ist ein kartesisches Achsensystem erzeugbar, das einen gemeinsamen Ursprung aufweist.

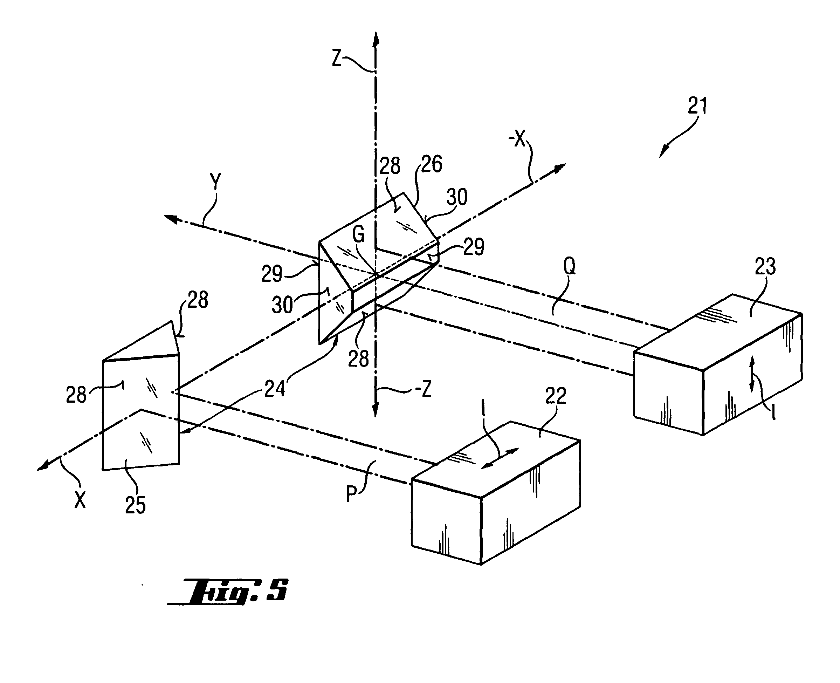

Die in Fig. 4 schematisch dargestellte Laseranordnung 11 umfast wiederum zwei Halbleiterlaser 12, 13, die unter einem spitzen Winkel zueinander angeordnet sind. Die lichtemittierende Flächen der Halbleiterlaser 12, 13 sind derart ausgerichtet, dass ihre Längsausdehnungen senkrecht zueinander verlaufen. Dies ist durch die Pfeile l in den Halbleiterlasern 12, 13 angedeutet. Die beiden Laserlichtquellen 12, 13 sind direkt auf einen Strahlteiler 17 gerichtet und werden dort überlagert. Zwischen dem Strahlteiler 17 und den Laserlichtquellen 12, 13 können beispielsweise Kollimatorlinsen 14, 15 angeordnet sein. Die reflektierenden Flächen 18 des Strahlteilers 17 sind senkrecht zueinander angeordnet und gegenüber den einfallenden Primärstrahlenbündeln P, Q derart geneigt, dass die reflektierten Teilstrahlenbündel senkrecht zueinander verlaufen und sich in ihrer geometrischen Verlängerung in einem Ursprung treffen. Im Fall von vier reflektierenden Flächen 18 verlaufen jeweils zwei Paare von Teilstrahlenbündeln senkrecht zueinander. Zur Herstellung von fünf Teilstrahlenbündeln ist eines der einfallenden Primärstrahlenbündel parallel zur Achse des Strahlteilers ausgerichtet. Die für dieses Primärstrahlenbündel massgeblichen reflektierenden Flächen sind dann gegenüber der Richtung des Primärstrahls um 45° geneigt. Für den Mittenteil des Primärstrahlenbündels ist der Strahlteiler mit einer Durchgangsbohrung oder mit planparallelen, polierten Flächen versehen.

Bei der in Fig. 5 schematisch dargestellten Laseranordnung, die gesamthaft mit dem Bezugszeichen 21 versehen ist, sind zwei Halbleiterlaser 22, 23 nebeneinander angeordnet. Ihre lichtemittierenden Flächen sind senkrecht zueinander ausgerichtet, was durch die senkrecht zueinander verlaufenden Pfeile l angedeutet ist. Die Primärstrahlen P, Q sind auf einen Strahlteiler 24 gerichtet, der zwei Prismen 25, 26 umfasst. Jedes Prisma 25 bzw. 26 befindet sich im Strahlengang eines Primärstrahlenbündels P bzw. Q. Das erste Prisma 25 befindet sich im Strahlengang des ersten Primärstrahlenbündels P und besitzt zwei reflektierende Flächen 28, die gegenüber dem ersten Primärstrahlenbündel P um 45° geneigt verlaufen. Dadurch wird das Primärstrahlenbündel P in zwei Teilstrahlenbündel Z, -Z aufgespalten, die miteinander fluchten, jedoch eine entgegengesetzte Ausbreitungsrichtung aufweisen. In unmittelbarer Nachbarschaft einer der reflektierenden Flächen des ersten Prismas 25 ist das zweite Prisma 26 angeordnet, das sich im Strahlengang des zweiten Primärstrahlengangs Q befindet. Das zweite Prisma 26 ist gegenüber dem ersten Prisma um 90° gedreht. Entsprechend sind auch seine reflektierenden Flächen 28 gegenüber denen des ersten Prismas 25 um 90° gedreht. Das zweite Prisma 26 besitzt planparallele, polierte Flächen 29 an der Prismenkante und an der Basisfläche. Die Seitenflächen 30 des zweiten Prismas 26 sind planparallel ausgebildet und verlaufen senkrecht zu den vom ersten Prisma 25 abgelenkten Teilstrahlenbündeln Z, -Z. Die beiden Seitenflächen 30 bilden Durchtrittflächen für das abgelenkte Teilstrahlenbündel Z und sind optisch poliert. Von den reflektierenden Prismenflächen 28 des zweiten Prismas 26 wird das einfallende zweite Primärstrahlenbündel Q um 90° abgelenkt. Dies ist durch die Teilstrahlenbündel X, -X angedeutet, die senkrecht zu den vom ersten Prisma 25 abgelenkten Teilstrahlenbündeln Z, -Z verlaufen. Ein Teil des zweiten Primärstrahlenbündels Q passiert das Prisma 26 ungehindert durch die planparallelen, polierten Flächen 29 und bildet ein Teilstrahlenbündel Y, welches senkrecht zu den übrigen Teilstrahlenbündeln Z, -Z, Y verläuft. Auf diese Weise wird ein kartesisches Achsensystem mit einem gemeinsamen Ursprung erzeugt.

Die beiden Halbleiterlaser der Laseranordnung bieten die Möglichkeit, die Achsen des kartesischen Achsensystems mit unterschiedlichen Intensitäten oder auch in unterschiedlichen Farben auszubilden, indem Halbleiterlaser mit unterschiedlichen Leistungen und/oder Wellenlängen eingesetzt werden. Durch die erfindungsgemässe Anordung der beiden Halbleiterlaser wird die elliptische Strahlform der Primärstrahlen in vorteilhafter Weise überlagert. In Verbindung mit einem Strahlteiler der beschriebenen Art können dadurch die Verluste deutlich verringert werden, da der Querschnitt des einfallenden Laserstrahlenbündels der Anordung der reflektierenden Flächen angeglichen ist. Durch die Überlagerung der beiden Primärstrahlen zu einem Gesamtstrahlenbündel können Halbleiterlaser mit niedrigeren Leistungen eingesetzt werden, wodurch die Wirtschaftlichkeit von mit der Laseranordnung ausgestatteten Laserrichtgeräten erhöht wird.

## Patentansprüche

1. Laseranordnung für ein mehrstrahliges Laserrichtgerät, das eine Lichtquelle zur Erzeugung wenigstens eines primären Laserstrahlenbündels (G) und einen optischen Strahlteiler (7; 17; 24) mit reflektierenden Flächen (8; 18; 28) umfasst, durch den das wenigstens eine primäre Laserstrahlenbündel (G) in mindestens zwei, senkrecht zueinander und längs zwei Dimensionen des primären Laserstrahlenbündel querschnitts verlaufende Teilstrahlenbündel (T) aufspaltbar ist, **dadurch gekennzeichnet, dass** die Lichtquelle zwei Halbleiterlaser (2, 3; 12, 13; 22, 23) umfasst, deren lichtemittierende Flächen (E) eine Längs- und eine Querausdehnung (l, w) aufweisen, die zueinander in einem Verhältnis von etwa 2,5 : 1 bis etwa 4 : 1 stehen, wobei die Längsausdehnungen (l) der lichtemittierenden Flächen (E) unter einem Winkel von 90° zueinander angeordnet sind und die von den beiden Halbleiterlasern (2, 3; 12, 13; 22, 23) erzeugten Primärstrahlenbündel (P, Q) vor oder am Strahlteiler (7; 17; 24) überlagerbar sind.

2. Laseranordnung nach Anspruch 1, **dadurch gekennzeichnet, dass** die beiden Halbleiterlaser (2, 3; 12, 13; 22, 23) unterschiedlich grosse Leistungen aufweisen.

3. Laseranordnung nach Anspruch 1 oder 2, **dadurch gekennzeichnet, dass** die beiden Halbleiterlaser (2, 3; 12, 13; 22, 23) zwei Primärstrahlenbündel (P, Q) unterschiedlicher Wellenlängen emittieren.

4. Laseranordnung nach einem der vorangehenden Ansprüche, **dadurch gekennzeichnet, dass** wenigstens zwischen einem der Halbleiterlaser (2, 3; 12, 13; 22, 23) und dem Strahlteiler (7; 17) ein oder mehrere strahlformende Elemente (4, 5; 14, 15) angeordnet sind.

5. Laseranordnung nach einem der vorangehenden Ansprüche, **dadurch gekennzeichnet, dass** die Halbleiterlaser (2, 3) mit ihren lichtemittierenden Flächen (4) senkrecht zueinander angeordnet sind und die beiden emittierten Primärstrahlenbündel (P, Q) an einem halbdurchlässigen Spiegel (6), der zwischen den Halbleiterlasern (2, 3) und dem Strahlteiler (7) angeordnet ist und gegenüber der Ausbreitungsrichtung beider Primärstrahlenbündel (P, Q) unter 45° geneigt angeordnet ist, zu einem primären Gesamtstrahlenbündel (G) überlagerbar sind.

6. Laseranordnung nach Anspruch 5, **dadurch gekennzeichnet, dass** der Strahlteiler (7) wenigstens zwei, vorzugsweise vier, reflektierende Flächen (8) aufweist, die im rechten Winkel zueinander und im gleichen Abstand vom halbdurchlässigen Spiegel (6) angeordnet sind und gegenüber dem primären Gesamtstrahlenbündel (G) jeweils um 45° geneigt sind und derart in das primäre Gesamtstrahlenbündel (G) ragen, dass für einen Teil des primären Gesamtstrahlenbündels ein Strahldurchlass gebildet ist.

7. Laseranordnung nach einem der Ansprüche 1 - 4, **dadurch gekennzeichnet, dass** die Halbleiterlaser (12, 13) unter einem spitzen Winkel zueinander angeordnet sind und der Strahlteiler (17) wenigstens zwei, vorzugsweise vier, reflektierende Flächen (18) aufweist, die miteinander jeweils paarweise einen Winkel von 90° einschliessen und vom zugeordneten Halbleiterlaser (12, 13) den gleichen Abstand besitzen, wobei sie gegenüber dem jeweils einfallenden Primärstrahlenbündel (P, Q) unter 45° geneigt angeordnet sind.

8. Laseranordnung nach einem der Ansprüche 1 - 4, **dadurch gekennzeichnet, dass** die lichtemittierenden Flächen (E) der Halbleiterlaser (22, 23) parallel zueinander ausgerichtet sind und der Strahlteiler (24) von zwei Prismen (25, 26) gebildet ist, die senkrecht zueinander verlaufende Längsachsen besitzen und mit ihren beiden Prismenflächen (28) unter 45° gegenüber dem jeweiligen, zugeordneten Primärstrahlenbündel (P, Q) angeordnet sind, wobei dasjenige Prisma (26), dessen eine von zwei planparallelen Seitenflächen in Nachbarschaft zu einer Prismenfläche (28) des anderen Prismas (25) angeordnet ist, optisch polierte Seitenflächen (30) besitzt sowie an der Prismenkante und an der Basisfläche planparallele, polierte Flächen (29) aufweist, die senkrecht zu den Seitenflächen (30) verlaufen und für den Durchtritt eines Mittenbereich des einfallenden Primärstrahlenbündels (Q) ausgebildet sind.

9. Laseranordnung nach einem der vorangehenden Ansprüche, **dadurch gekennzeichnet, dass** die reflektierenden Flächen (8; 18; 28) des Strahlteilers (7; 17; 24) zu einer baulichen Einheit miteinander verbunden sind.

10. Laseranordnung nach einem der vorangehenden Ansprüche, **dadurch gekennzeichnet, dass** die reflektierenden Flächen (8; 18; 28) des Strahlteilers (7; 17; 24) an einem monolithischen Bauteil ausgebildet sind.

## Claims

1. A laser assembly for a multi-beam laser aiming device which comprises a light source for the generation of at least one primary laser beam (G) and an optical beam splitter (7; 17; 24) with reflecting surfaces (8; 18; 28), by which the at least one primary laser beam (G) can be split into at least two partial beams (T) which extend perpendicular to one another along two dimensions of the cross-section of the primary laser beam, **characterized in that** the light source comprises two semiconductor lasers (2, 3; 12, 13; 22, 23), the light-emitting surfaces (E) of which have a longitudinal and a transverse dimension (1, w) which are at a ratio to one another of approximately 2.5 : 1 to approximately 4 : 1, said longitudinal dimensions (1) of the light-emitting surfaces (E) being disposed at an angle of 90° to one another and the primary beams (P, Q) generated by the two semiconductor lasers (2, 3; 12, 13, 22, 23) being superimposable before or at the beam splitter (7; 17; 24).

2. A laser assembly according to Claim 1, **characterized in that** the two semiconductor lasers (2, 3; 12, 13; 22, 23) have powers of different magnitudes.

3. A laser assembly according to Claim 1 or 2, **characterized in that** the two semiconductor lasers (2, 3; 12, 13; 22, 23) emit two primary beams (P, Q) of different wavelengths.

4. A laser assembly according to one of the preceding claims, **characterized in that** one or more beam-forming elements (4, 5; 14, 15) are disposed between at least one of the semiconductor lasers (2, 3; 12, 13; 22, 23) and the beam splitter (7; 17).

5. A laser assembly according to one of the preceding claims, **characterized in that** the semiconductor lasers (2, 3) are disposed with their light-emitting surfaces (4) perpendicular to one another and the two emitted primary beams (P, Q) can be superimposed at a semi-transparent mirror (6), disposed between the semiconductor lasers (2, 3) and the beam splitter (7) in such a way as to be inclined at an angle of 45° relative to the direction of propagation of the two primary beams (P, Q), to form a primary full beam (G).

6. A laser assembly according to Claim 5, **characterized in that** the beam splitter (7) has at least two, and preferably four, reflecting surfaces (8) which are disposed at right angles to one another and are at an equal distance from the semi-transparent mirror (6), each being inclined at an angle of 45° relative to the primary full beam (G) and projecting into said primary full beam in such a way that a passage is formed for a portion of the primary full beam.

7. A laser assembly according to one of Claims 1 to 4, **characterized in that** the semiconductor lasers (12, 13) are disposed at an acute angle to one another and the beam splitter (17) has at least two, and preferably four, reflecting surfaces (18), which respectively form in pairs an angle of 90° with one another and are at an equal distance from the associated semiconductor laser (12, 13), said reflecting surfaces (18) being disposed so as to be inclined at an angle of 45° relative to the respective incident primary beam (P, Q).

8. A laser assembly according to one of Claims 1 to 4, **characterized in that** the light-emitting surfaces (E) of the semiconductor lasers (22, 23) are aligned so as to be parallel to one another and the beam splitter (24) is formed by two prisms (25, 26), which have their longitudinal axes extending perpendicular to one another and their two prism surfaces (28) disposed at an angle of 45° relative to the respective associated primary beam (P, Q), in which case that prism (26) having one of its two plane-parallel side surfaces disposed in the vicinity of a prism surface (28) of the other prism (25) has optically polished side surfaces (30) as well as having plane-parallel, polished surfaces (29) on the prism edge and on the base surface, said surfaces (29) extending perpendicular to the side surfaces (30) and being formed for the passage of a middle portion of the incident primary beam (Q).

9. A laser assembly according to one of the preceding claims, **characterized in that** the reflecting surfaces (8; 18; 28) of the beam splitter (7; 17; 24) are combined to form one structural unit.

10. A laser assembly according to one of the preceding claims, **characterized in that** the reflecting surfaces (8; 18; 28) of the beam splitter (7; 17; 24) are formed on a monolithic structural member.

## Revendications

1. Ensemble laser pour un dispositif de pointage à laser à plusieurs faisceaux comprenant une source lumineuse pour produire au moins un faisceau laser primaire (G), et un séparateur optique de faisceau (7 ; 17 ; 24) à surfaces réfléchissantes (8 ; 18 ; 28) permettant de diviser le faisceau laser primaire au nombre d'au moins un (G) en au moins deux faisceaux partiels (T) qui sont perpendiculaires entre eux et s'étendent suivant deux dimensions de la section transversale du faisceau laser primaire, **caractérisé en ce que** la source lumineuse comprend deux lasers à semi-conducteurs (2, 3 ; 12, 13 ; 22, 23) dont les surfaces d'émission de lumière (E) possèdent des extensions longitudinale et transversale (1, w) qui présentent entre elles un rapport d'environ 2,5 : 1 à environ 4 : 1, les extensions longitudinales (1) des surfaces d'émission de lumière (E) étant disposées selon un angle de 90° l'une par rapport à l'autre, et les faisceaux laser primaires (P, Q) produits par les deux lasers à semi-conducteurs (2, 3 ; 12, 13 ; 22, 23) étant superposables avant ou sur le séparateur de faisceau (7 ; 17 ; 24).

2. Ensemble laser selon la revendication 1, **caractérisé en ce que** les deux lasers à semi-conducteurs (2, 3 ; 12, 13 ; 22, 23) possèdent des puissances différentes.

3. Ensemble laser selon la revendication 1 ou 2, **caractérisé en ce que** les deux lasers à semi-conducteurs (2, 3 ; 12, 13 ; 22, 23) émettent deux faisceaux laser primaires (P, Q) de longueurs d'ondes différentes.

4. Ensemble laser selon une des revendications précédentes, **caractérisé en ce qu'**un ou plusieurs éléments de formation de rayons (4, 5 ; 14, 15) sont disposés au moins entre un des lasers à semi-conducteurs (2, 3 ; 12, 13 ; 22, 23) et le séparateur de faisceau (7 ; 17).

5. Ensemble laser selon une des revendications précédentes, **caractérisé en ce que** les surfaces d'émission de lumière (4) des lasers à semi-conducteurs (2, 3) sont disposées perpendiculairement l'une à l'autre et les deux faisceaux laser primaires émis (P, Q) sont superposables pour former un faisceau primaire total (G) au niveau d'un miroir semi-transparent (6) qui est disposé entre les lasers à semi-conducteurs (2, 3) et le séparateur de faisceau (7) et qui est incliné à 45° par rapport à la direction de propagation des deux faisceaux laser primaires (P, Q).

6. Ensemble laser selon la revendication 5, **caractérisé en ce que** le séparateur de faisceau (7) comprend au moins deux, de préférence quatre surfaces réfléchissantes (8) qui sont disposées à angle droit les unes par rapport aux autres et à égale distance du miroir semi-transparent (6) et qui sont chacune inclinées de 45° par rapport au faisceau primaire total (G) et s'interposent sur le faisceau primaire total (G) de façon à laisser passer une partie des rayons du faisceau primaire total.

7. Ensemble laser selon une des revendications 1 à 4, **caractérisé en ce que** les lasers à semi-conducteurs (12, 13) sont disposés selon un angle aigu l'un par rapport à l'autre et le séparateur de faisceau (17) comporte au moins deux, de préférence quatre surfaces réfléchissantes (18) qui forment entre elles par paires un angle de 90° et possèdent une distance identique au laser à semi-conducteurs associé (12, 13) tout en étant inclinées de 45° par rapport au faisceau laser primaire incident correspondant (P, Q).

8. Ensemble laser selon une des revendications 1 à 4, **caractérisé en ce que** les surfaces d'émission de lumière (E) des lasers à semi-conducteurs (22, 23) sont orientées parallèlement l'une à l'autre et le séparateur de faisceau (24) est formé par deux prismes (25, 26) qui possèdent des axes longitudinaux perpendiculaires entre eux et dont les surfaces de prisme (28) sont disposées à 45° par rapport au faisceau laser primaire associé correspondant (P, Q), le prisme (26), dont une des deux surfaces latérales à plans parallèles est disposée au voisinage d'une surface de prisme (28) de l'autre prisme (25), possédant des surfaces latérales à poli optique (30) et, sur l'arête du prisme et sur la surface de base, des surfaces polies à plans parallèles (29) qui s'étendent perpendiculairement aux surfaces latérales (30) et qui sont conçues pour laisser passer une zone centrale du faisceau laser primaire incident (Q).

9. Ensemble laser selon une des revendications précédentes, **caractérisé en ce que** les surfaces réfléchissantes (8 ; 18 ; 28) du séparateur de faisceau (7 ; 17 ; 24) sont reliées entre elles pour former une unité structurelle.

10. Ensemble laser selon une des revendications précédentes, **caractérisé en ce que** les surfaces réfléchissantes (8 ; 18 ; 28) du séparateur de faisceau (7 ; 17 ; 24) sont réalisées sur un élément structurel monolithique.
